# EUROPEAN PATENT APPLICATION

(11) **EP 3 739 706 A1**
(43) Date of publication of application: **18.11.2020**
(21) Application number: 19860069.4
(22) Date of filing: 12.09.2019
(51) Int. Cl.: H02H 3/087

(54) **CONTROL AND PROTECTION SYSTEM FOR MECHANICAL HIGH-VOLTAGE DIRECT CURRENT CIRCUIT BREAKER, AND CONTROL METHOD FOR SAME**

(30) Priority: 12.09.2018 CN 201811064915
(71) Applicant: Shandong Power Equipment Co., Ltd., Shizhong District Jinan Shandong 250022 (CN); Shandong Electrical Engineering & Equipment Group Co., Ltd., Jinan, Shandong 250101 (CN)
(72) Inventor: WANG, Kun, Shandong 250022 (CN); TAN, Chong, Shandong 250022 (CN); YU, Jianbin, Shandong 250022 (CN); XUE, Jiyin, Shandong 250022 (CN); YAN, Shikai, Shandong 250022 (CN); ZHANG, Yushu, Shandong 250022 (CN); BAI, Changyu, Shandong 250022 (CN); ZHANG, Manyu, Shandong 250022 (CN)
(74) Representative: White, Andrew John
(86) International application number: PCT/CN2019/105746
(87) International publication number: WO 2020/052663

(57) **Abstract**

Embodiments of the present application disclose a control and protection system for a mechanical high-voltage direct current circuit breaker, and a control method for the same. The system comprises: an electrical current acquisition and determination module configured to acquire an electrical current parameter in a topological structure of a mechanical high-voltage direct current circuit breaker, and determine, according to the electrical current parameter, whether there is a short-circuit, and feed back a determination result and the electrical current parameter to a central processor module; a voltage information acquisition module configured to acquire a voltage parameter of a converter capacitor in the topological structure of the mechanical high-voltage direct current circuit breaker, and send the voltage parameter to the central processor module; the central processor module configured to send a control instruction to an action control module according to the determination result sent by the electrical current acquisition and determination module and/or the voltage parameter sent by the voltage information acquisition module; and the action control module configured to perform a corresponding action according to the control instruction sent by the central processor module.

## Description

### CROSS-REFERENCE TO RELATED APPLICATION

The present application is filed based upon and claims priority to Chinese Patent Application No. 201811064915.3, filed on September 12, 2018, the contents of which are hereby incorporated by reference in its entirety.

### TECHNICAL FIELD

The application relates to the technical field of direct current distribution, and particularly to a control and protection system for a mechanical high-voltage direct current circuit breaker and a control method for the same.

### BACKGROUND

With the shortage of conventional fossil energy resource and the continuous worsening of environmental problems, a multi-terminal high-voltage direct current transmission technology capable of implementing massive access of intermittent renewable energy has been rapidly developed, extension of a flexible direct current technology on a distribution side has also been stimulated to a certain extent and application enhancement of a direct current distribution network has been promoted. Development of a direct current grid makes higher requirements on reliability and stability, and a huge challenge is interruption of a short-circuit current. The urgent requirements and the huge challenge promote research and development of high-voltage direct current circuit breakers.

A direct current circuit breaker may be divided into three types: a solid-state direct current circuit breaker, a mechanical direct current circuit breaker and a hybrid direct current circuit breaker. The mechanical direct current circuit breaker has broad research and application prospect due to its advantages of low cost, low loss, high breaking capability and the like.

A control and protection system for a mechanical high-voltage direct current circuit breaker involves the aspects of rapid recognition of a short-circuit current, rapid action of an electromagnetic repulsion mechanism, state feedback indication of the system, information interactive transmission and the like, and relatively high requirements are made to the reliability and stability of the control and protection system for a mechanical high-voltage direct current circuit breaker. In recent years, control and protection systems for a mechanical high-voltage direct current circuit breaker have been researched. However, they are imperfect in overall function and low in performance reliability and may not be directly applied to products and may not meet using requirements.

### SUMMARY

Embodiments of the application are intended to provide a control and protection system for a mechanical high-voltage direct current circuit breaker and a control method for the same.

The technical solutions provided in the embodiments of the application are implemented as follows.

The embodiments of the application provide a control and protection system for a mechanical high-voltage direct current circuit breaker, the system may include: a central processor module; and a current acquisition and determination module, a voltage information acquisition module and an action control module that are connected with the central processor module.

The current acquisition and determination module may be configured to acquire a current parameter of a topology structure of the mechanical high-voltage direct current circuit breaker, determine whether a short-circuit occurs according to the current parameter and feed back a determination result and the current parameter to the central processor module.

The voltage information acquisition module may be configured to acquire a voltage parameter of a commutation capacitor in the topology structure of the mechanical high-voltage direct current circuit breaker and send the voltage parameter to the central processor module.

The central processor module may be configured to send a control instruction to the action control module according to at least one of: the determination result sent by the current acquisition and determination module or the voltage parameter sent by the voltage information acquisition module.

The action control module may be configured to perform at least one of the following actions according to the control instruction sent by the central processor module: opening and closing of a permanent magnet mechanism of a Main Circuit Breaker, MCB, opening of an electromagnetic repulsion mechanism of the MCB, opening and closing of a Bypass Circuit Breaker, BCB, and turning-on or turning-off of a commutation switch.

In an optional embodiment of the application, the current acquisition and determination module may include a current information acquisition unit and a current detection and processing unit.

The current acquisition and determination module may be configured to acquire the current parameter of the topology structure in the mechanical high-voltage direct current circuit breaker, the current parameter including at least one of: current change rate or current amplitude.

The current detection and processing unit may be configured to determine whether short-circuit occurs according to the current parameter and feed back the determination result to the central processor module.

In an optional embodiment of the application, the action control module may include: an optical fiber isolation unit; and the permanent magnet mechanism of the MCB, the electromagnetic repulsion mechanism of the MCB, the BCB and the commutation switch that are connected with the optical fiber isolation unit.

The optical fiber isolation unit may be configured to obtain the control instruction sent by the central processor module and send the control instruction to at least one component among the permanent magnet mechanism of the MCB, the electromagnetic repulsion mechanism of the MCB, the BCB or the commutation switch for the at least one component receiving the control instruction to perform an action corresponding to the control instruction.

In an optional embodiment of the application, the system may further include a charging module of a repulsion capacitor, configured to charge the repulsion capacitor; the repulsion capacitor may be adapted to the electromagnetic repulsion mechanism of the MCB; and the repulsion capacitor may be configured to supply power to a repulsion coil in the electromagnetic repulsion mechanism of the MCB.

The central processor module may further be configured to control the charging module of the repulsion capacitor to charge the repulsion capacitor, and acquire voltage information of the repulsion capacitor.

In an optional embodiment of the application, the system may further include a state feedback indication module, a power module, an information interaction and recording module and a crash prevention module.

The state feedback indication module may be configured to display at least one of the following information: an opening and closing state of the MCB, an opening and closing state of the BCB, temperature, humidity, voltage information of the repulsion capacitor or voltage information of the commutation capacitor, and the state feedback indication module may further be configured to detect an input operation and send the input operation to the central processor module, the input operation including at least one of an operation for controlling opening and closing of the MCB or an operation for controlling opening and closing of the BCB.

The power module may be configured to supply power to the system.

The information interaction and recording module may be configured to implement communication with an external device and recording of system running information.

The crash prevention module may be configured to prevent the central processor module from entering a crash state.

In an optional embodiment of the application, the topology structure of the mechanical high-voltage direct current circuit breaker may include the BCB configured to interrupt a residual current and three branches connected in parallel that includes: a first branch, which may include the MCB configured to conduct a normal working current of the system, an outlet terminal of the MCB may be connected with an inlet terminal of the BCB; a second branch which may be a commutation branch and may include a commutation reactor, the commutation switch, a charging resistor and the commutation capacitor, an end of the commutation reactor may be connected with an inlet terminal of the MCB, another end of the commutation reactor may be connected with an end of the commutation switch, another end of the commutation switch may be connected with a positive electrode of the commutation capacitor and an end of the charging resistor respectively, another end of the charging resistor may be grounded, and a negative electrode of the commutation capacitor may be connected with the inlet terminal of the BCB; and a third branch which may be an energy release branch and may include a lightning arrester, an end of the lightning arrester may be connected with the inlet terminal of the MCB, and another end of the lightning arrester may be connected with the inlet terminal of the BCB.

In an optional embodiment of the application, the MCB may be a Vacuum Circuit Breaker, VCB.

In an optional embodiment of the application, the lightning arrester may be a metal oxide lightning arrester matching with a voltage grade of the system.

In an optional embodiment of the application, the current detection and processing unit may be configured to determine a current rise rate and a current increment based on the current parameter, start short-circuit current detection responsive to that the current rise rate is greater than a first threshold value, send a short-circuit current protection signal to the central processor module responsive to detecting that the current rise rate remains greater than the first threshold value within specified delay time period, , send the short-circuit current protection signal to the central processor module responsive to that the current rise rate is less than the first threshold value but greater than a second threshold value and the current increment is greater than a third threshold value, the second threshold value being less than the first threshold value, and exit from short-circuit current detection protection responsive to that the current rise rate is less than the second threshold value.

The embodiments of the application also provide a control method for a control and protection system for a mechanical high-voltage direct current circuit breaker, which may include the following operations.

It is determined that whether a feedback determination result is detected, the feedback determination result indicating that short-circuit occurs to the system.

A central processor module sends an opening signal to an electromagnetic repulsion mechanism of a Main Circuit Breaker, MCB, responsive to detecting the feedback determination result.

The central processor module sends a turning-on signal to a commutation switch responsive to that a distance between contacts of the MCB reaches a specific open distance.

The central processor module sends an opening signal according to a preset time sequence to a Bypass Circuit Breaker, BCB, for turning off the BCB to interrupt a residual current.

It is detected whether the MCB is opened , , it is detected whether the BCB is opened responsive to detecting that the MCB is opened , it is determined that a short-circuit current is successfully interrupted responsive to detecting that the BCB is opened, , and it is determined that the short-circuit current fails to be interrupted responsive to detecting that the MCB is not opened or the BCB is not opened,.

The embodiments of the application achieve the following beneficial effects.
1: According to the technical solutions provided in the embodiments of the application, the current acquisition and determination module is designed so as to ensure a rapid detection and determination of the short-circuit current, and ensure the reliability of the short-circuit current detection and determination.
2: The overall working reliability of the system is improved on multiple aspects. In terms of software, a hierarchical architecture is adopted to improve the simplicity and maintainability of the software, and a working mode and a debugging mode are supported. In terms of hardware, dual power supplies are adopted to supply power to the system to ensure the power supply stability, and the crash prevention module is added to prevent crash of the system.
3: Action flows in different working states of a mechanical high-voltage direct current circuit breaker are clear, reasonable and convenient to control.

### BRIEF DESCRIPTION OF THE DRAWINGS

FIG. 1 is a simplified diagram of a topology structure of a mechanical high-voltage direct current circuit breaker according to an embodiment of the application.
FIG. 2 is a schematic design block diagram of a control and protection system for a mechanical high-voltage direct current circuit breaker according to an embodiment of the application.
FIG. 3 is a flowchart of short-circuit current detection of a current detection and processing unit in a control and protection system for a mechanical high-voltage direct current circuit breaker according to an embodiment of the application.
FIG. 4 is a software architecture diagram of a central processor in a control and protection system for a mechanical high-voltage direct current circuit breaker according to an embodiment of the application.
FIG. 5 is a flowchart of interruption of a short-circuit current in a control and protection system for a mechanical high-voltage direct current circuit breaker according to an embodiment of the application.

### DETAILED DESCRIPTION

For enabling related persons to understand the invention better, the invention will be explained and described below in combination with the drawings in detail, thereby implementing better application to the related art.

A direct current circuit breaker is an important device capable of interrupting a short-circuit current to ensure the running stability of a direct current grid. A control and protection system for a mechanical high-voltage direct current circuit breaker reasonably controls a state of each component in topology structure of a circuit breaker according to a design flow. A mechanical high-voltage direct current circuit breaker mainly includes an MCB branch, a commutation branch, a lightning arrester branch and a BCB.

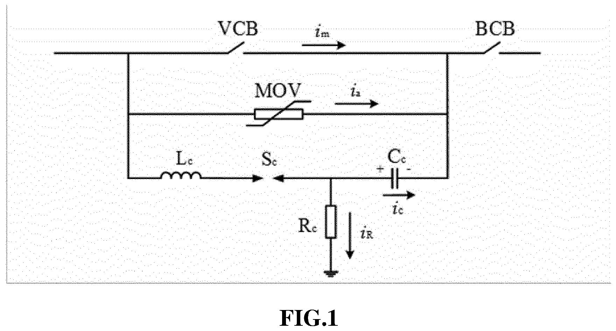

As shown in FIG. 1, a topology structure of a mechanical high-voltage direct current circuit breaker in the embodiment of the application includes a BCB configured to interrupt a residual current and three branches connected in parallel that includes: a first branch which includes an MCB configured to conduct a normal working current of a system, and the MCB is a VCB. The MCB isan operating mechanism in which the electromagnetic repulsion and the permanent magnet are coupled, and an outlet terminal of the MCB is connected with an inlet terminal of the BCB; a second branch which is a commutation branch and includes a commutation reactor L_{c}, a commutation switch S_{c}, a charging resistor R_{c} and a commutation capacitor C_{c}, an end of the commutation reactor L_{c} is connected with an inlet terminal of the MCB, another end of the commutation reactor L_{c} is connected with an end of the commutation switch S_{c}, another end of the commutation switch S_{c} is connected with a positive electrode of the commutation capacitor C_{c} and an end of the charging resistor R_{c} respectively, another end of the charging resistor R_{c} is grounded, and a negative electrode of the commutation capacitor C_{c} is connected with the inlet terminal of the BCB; a third branch which is an energy release branch and includes a lightning arrester MOV, an end of the lightning arrester MOV is connected with the inlet terminal of the MCB, and another end of the lightning arrester MOV is connected with the inlet terminal of the BCB. In the embodiment, the lightning arrester MOV is a metal oxide lightning arrester matching with a voltage grade of the system.

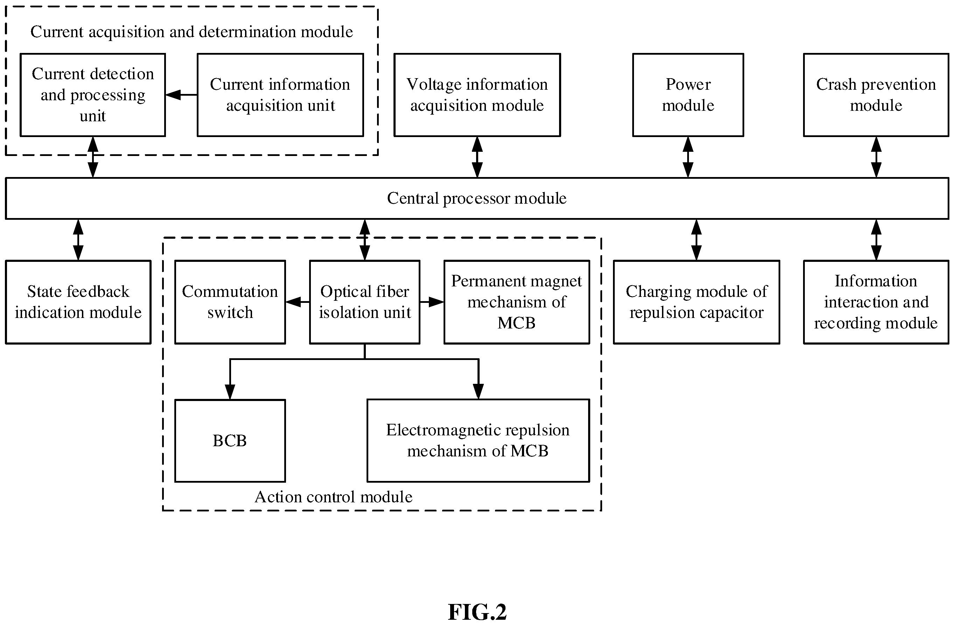

As shown in FIG. 2, a control and protection system for a mechanical high-voltage direct current circuit breaker includes: a central processor module; and a current acquisition and determination module, a voltage information acquisition module and an action control module that are connected with the central processor module.

The current acquisition and determination module is configured to acquire a current parameter of a topology structure of a mechanical high-voltage direct current circuit breaker, determine whether short-circuit occurs according to the current parameter and feed back a determination result to the central processor module.

The voltage information acquisition module is configured to acquire a voltage parameter of a commutation capacitor C_{c} in the topology structure of the mechanical high-voltage direct current circuit breaker and send the voltage parameter to the central processor module.

The central processor module is configured to send a control instruction to the action control module according to at least one of: the determination result sent by the current acquisition and determination module, or the voltage parameter sent by the voltage information acquisition module.

The action control module is configured to perform at least one of the following actions according to the control instruction sent by the central processor module: opening and closing of a permanent magnet mechanism of the MCB, opening of an electromagnetic repulsion mechanism of the MCB, opening and closing of the BCB, or turning-on or turning-off of a commutation switch.

In the embodiment, the central processor module is responsible for unified processing of information and sending of a related action instruction.

In an optional embodiment of the application, the current acquisition and determination module includes a current information acquisition unit and a current detection and processing unit. The current acquisition and determination module is configured to acquire the current parameter of the topology structure of the mechanical high-voltage direct current circuit breaker, the current parameter including at least one of: a current change rate or a current amplitude.

The current detection and processing unit is configured to determine whether short-circuit occurs according to the current parameter and feed back the determination result to the central processor module.

In the embodiment, as an example, the current information acquisition unit may include: a Rogowski coil, a Hall current sensor, and a corresponding signal conditioning circuit thereof. The Rogowski coil is responsible for acquiring the current change rate. The Hall current sensor is responsible for acquiring the current amplitude. Parameters acquired by the Rogowski coil and the Hall current sensor, after passing through the signal conditioning circuit, may be transmitted to the current detection and processing unit. The current detection and processing unit determines, in combination with the current change rate and the current amplitude, whether short-circuit occurs and sends the corresponding determination result and the current parameter to the central processor module.

In the embodiment, the action control module includes: an optical fiber isolation unit; and the permanent magnet mechanism of the MCB, the electromagnetic repulsion mechanism of the MCB, the BCB and the commutation switch that are connected with the optical fiber isolation unit. The optical fiber isolation unit is configured to obtain the control instruction sent by the central processor module and send the control instruction to at least one component among the permanent magnet mechanism of the MCB, the electromagnetic repulsion mechanism of the MCB, the BCB or the commutation switch for the at least one component receiving the control instruction to perform an action corresponding to the control instruction. The MCB electromagnetic repulsion mechanism is responsible for opening under a failure current. The MCB permanent magnet mechanism is responsible for closing, and opening under a rated current. According to the embodiment, a corresponding instruction is output to each component through the optical fiber isolation unit to implement good electrical isolation and ensure system safety.

In an optional embodiment of the application, the system further includes a charging module of a repulsion capacitor, which is configured to charge the repulsion capacitor; the repulsion capacitor is adapted to the electromagnetic repulsion mechanism of the MCB; the repulsion capacitor is configured to supply power to a repulsion coil in the electromagnetic repulsion mechanism of the MCB; and the central processor module is further configured to control the charging module of the repulsion capacitor to charge the repulsion capacitor, and acquire voltage information of the repulsion capacitor.

In the embodiment, the charging module of the repulsion capacitor may charge the repulsion capacitor through a charger. The central processor module may perform information interaction with the charging module of the repulsion capacitor in a serial port communication manner. It can be understood that the central processor module may send a control instruction to the charging module of the repulsion capacitor in the serial port communication manner and acquire the voltage information of the repulsion capacitor in the serial port communication manner.

In an optional embodiment of the application, the system further includes a state feedback indication module, a power module, an information interaction and recording module and a crash prevention module.

The state feedback indication module is configured to display at least one of the following information: an opening and closing state of the MCB, an opening and closing state of the BCB, temperature, humidity, voltage information of the repulsion capacitor or voltage information of the commutation capacitor, and the state feedback indication module is further configured to detect an input operation and send the input operation to the central processor module, the input operation including at least one of an operation for controlling opening and closing of the MCB or an operation for controlling opening and closing of the BCB.

The power module is configured to supply power to the system.

The information interaction and recording module is configured to implement communication with an external device and recording of system running information.

The crash prevention module is configured to prevent the central processor module from entering a crash state.

In the embodiment, the state feedback indication module may be provided with a corresponding key, and the key can be triggered by a user to enable the state feedback indication module to detect the input operation.

In the embodiment, the power module may include a working power unit, a standby power unit and a power conversion unit. The power module provides power for the control and protection system for a mechanical high-voltage direct current circuit breaker, and provides standby power under the condition that working power is abnormal.

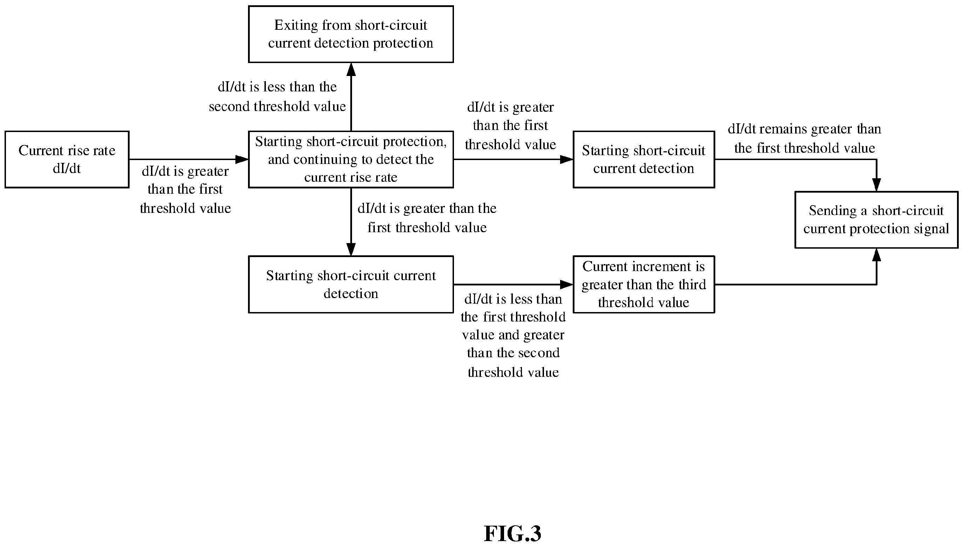

FIG. 3 is a flowchart of short-circuit current detection of a current detection and processing unit in a control and protection system for a mechanical high-voltage direct current circuit breaker according to an embodiment of the application. The current detection and processing unit is configured to determine a current rise rate and a current increment based on the current parameter, start short-circuit current detection responsive to that the current rise rate is greater than a first threshold value, send a short-circuit current protection signal to the central processor module responsive to detecting that the current rise rate remains greater than the first threshold value within specified delay time period, , send the short-circuit current protection signal to the central processor module responsive to that the current rise rate is less than the first threshold value but greater than a second threshold value and the current increment is greater than a third threshold value, , the second threshold value being less than the first threshold value, and exit from short-circuit current detection protection responsive to that the current rise rate is less than the second threshold value. The current rise rate may be obtained by dl/dt, I representing a current value.

In the embodiment, as shown in FIG. 3, short-circuit protection is started responsive to that the current rise rate dl/dt is greater than the first threshold value; after short-circuit protection is started, responsive to detecting that the current rise rate dI/dt is less than the second threshold value, short-circuit current detection protection is stopped; responsive to detecting that the current rise rate dl/dt remains greater than the first threshold value within the specified delay time period, the short-circuit current protection signal is sent; and responsive to detecting that the current rise rate dl/dt is less than the first threshold value but greater than the second threshold value and the current increment is greater than the third threshold value, the short-circuit current protection signal is sent.

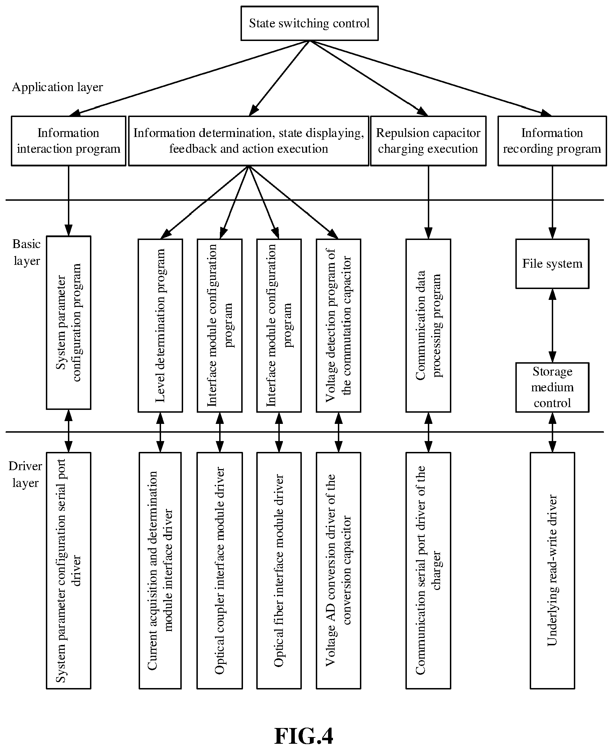

As shown in FIG. 4, hierarchy is adopted in terms of software design of a circuit breaker in the embodiment of the application. The whole software architecture sequentially includes, from top to bottom, an application layer, a basic layer and a driver layer. The driver layer is responsible for accessing to an underlying hardware circuit and chip and driving the different read-write. The driver layer mainly includes: a system parameter configuration serial port driver, a current acquisition and determination module interface driver, an optical coupler interface module driver, an optical fiber interface module driver, a commutation capacitor voltage Analog-to-Digital (AD) commutation driver, a charger communication serial port driver and an underlying read-write driver. The basic layer mainly includes: a system parameter configuration program, a level determination program, an interface module configuration program, a voltage detection program of the commutation capacitor, a communication data processing program and the like. The basic layer is an upper layer of the driver layer, and is mainly responsible for encapsulating the corresponding driver layer to be a program service unit and providing a simple and flexible interface for the top application layer to realize different functions. The application layer is mainly configured for an information interaction program, information determination, state displaying, feedback and action execution, repulsion capacitor charging execution, an information recording program and the like.

For ensuring the safety of the system and convenience for post maintenance, the software architecture of the control and protection system for a mechanical high-voltage direct current circuit breaker supports two working modes, i.e., a working mode and a debugging mode. In the working mode, the system supports realization of multiple functions. In the debugging mode, a working parameter and state of the mechanical high-voltage direct current circuit breaker may be rapidly and effectively acquired and a related test may be conducted, to facilitate post maintenance and upgrading.

The circuit breaker (including the MCB and the BCB) may have four working states according to functions: a rated working state, a short-circuit current interruption process, a rated current interruption process and a charging process. In the four working states, the short-circuit current interruption process is very critical.

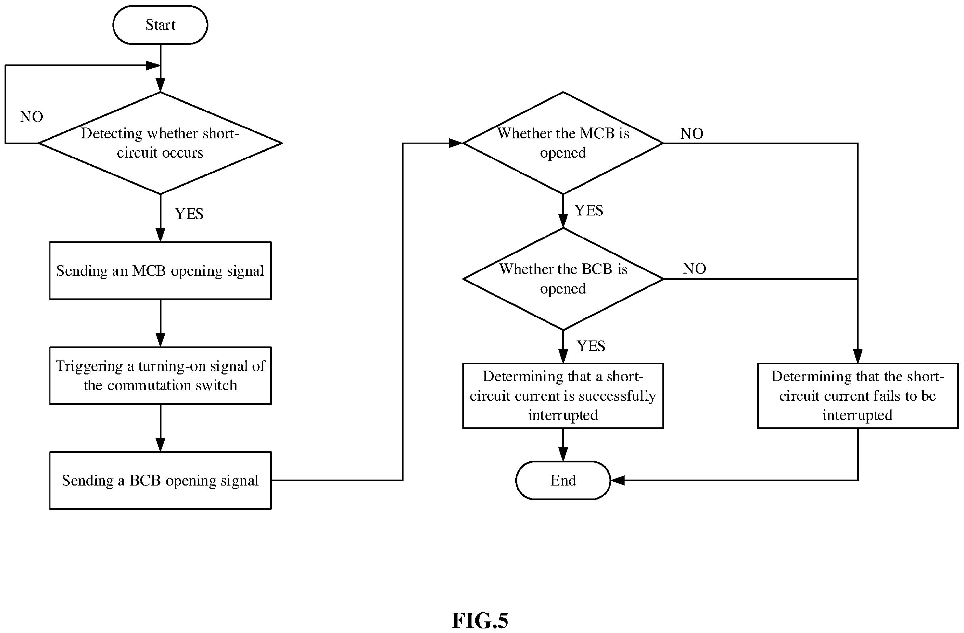

FIG. 5 is a flowchart of interrupting a short-circuit current in a control and protection system for a mechanical high-voltage direct current circuit breaker according to an embodiment of the application. According to the abovementioned control and protection system for a mechanical high-voltage direct current circuit breaker, a control method of the embodiment of the application includes the following operations.

It is determined whether a feedback determination result is detected, the feedback determination result indicating that short-circuit occurs to the system.

The central processor module sends an opening signal to an electromagnetic repulsion mechanism of the MCB responsive to detecting the feedback determination result indicating that short-circuit occurs to the system.

The central processor module sends a turning-on signal to the commutation switch responsive to that a distance between contacts of the MCB reaches a specific open distance.

The central processor module sends, according to a preset time sequence, an opening signal to the BCB for turning off the BCBto interrupt a residual current.

It is determined whether the MCB is opened , it is determined whether the BCB is opened responsive to detecting that the MCB is opened, , it is determined that a short-circuit current is successfully interrupted responsive to detecting that the BCB is opened, and it is determined that the short-circuit current fails to be interrupted responsive to detecting that the MCB is not opened or the BCB is not opened.

In the embodiment, whether short-circuit occurs to the system is detected through a current acquisition and determination module, and the current acquisition and determination module sends the feedback determination result and a current parameter to the central processor module responsive to detecting that short-circuit occurs to the system.

In the embodiment, the distance between the contacts of the MCB reaches the specific open distance refers to that the distance between the contacts of the MCB reaches a proper open distance under which a Transient Interruption Voltage (TIV) may be born.

In the embodiment, the operation that the central processor module sends the opening signal according to the preset time sequence to the BCB for turning off to interrupt the residual current specifically includes that: a commutation switch is triggered and switched on, a commutation capacitor starts discharging, and a current is gradually transferred from the MCB to a commutation branch; and in this stage, the commutation capacitor keeps discharging and a voltage thereof keeps decreasing. This is a first commutation process. After the first commutation process is ended, the current is completely transferred to the commutation branch, an electric arc in the MCB is extinguished at the current zero crossings, and TIVs at two ends of the MCB rapidly increase to a first negative peak value. The commutation capacitor keeps discharging, and voltages at two ends thereof gradually decrease to zero. Then, the commutation capacitor is continued to be charged, the voltages of the commutation capacitor start increasing, and meanwhile, the voltages at the two ends of the MCB also increase along with increasing of the voltages at the two ends of the commutation capacitor. In addition, due to stray commutation charging capacitance of the circuit breaker, the voltages at the two ends of the MCB may oscillate, and an oscillation amplitude may gradually decrease. The voltages at the two ends of the commutation capacitor reach a reference voltage of a lightning arrester MOV, the lightning arrester MOV starts acting, and the current of the system is started to be transferred from the commutation capacitor to the lightning arrester MOV. The current is gradually transferred from the commutation capacitor and the commutation switch to the lightning arrester MOV, and this is a second commutation process. The current is completely transferred to a lightning arrester MOV branch, and in this state, the current flowing through the commutation capacitor and the commutation switch crosses zero. The current in the lightning arrester MOV decreases gradually, and then the lightning arrester MOV is switched off when the current crosses zero. The BCB starts acting, and when the system current crosses zero, the clearance between the contacts of the BCB reaches a certain open distance, so that recovery voltages at two ends thereof may be born. Finally, the circuit is finally switched off to complete the whole interruption process.

For ensuring the reliability and stability of the mechanical high-voltage direct current circuit breaker, the control and protection system for a mechanical high-voltage direct current circuit breaker of the embodiments of the application is powered by dual power modules, and when the working power is abnormal, the system may be switched to be powered by the standby power. The crash prevention module is added to monitor a running state of the processor to prevent a crash phenomenon. An important running parameter and state of the system may be acquired, so that the running state of the system may be conveniently estimated, and a corresponding protection measure may be taken.

In some embodiments provided by the application, it should be understood that the disclosed system and method may be implemented in other manners. The system embodiment described above is schematic simply, and for example, division of the units is only logic function division, and other division manners may be adopted during practical implementation. For example, multiple units or components may be combined or integrated into another system, or some characteristics may be neglected or not performed. In addition, coupling or direct coupling or communication connection between each displayed or discussed component may be implemented through some interfaces, the indirect coupling or communication connection of the device or the units may be electrical and mechanical or adopt other forms.

The units described as separate parts may or may not be physically separated, and parts displayed as units may or may not be physical units, and namely may be located in the same place, or may also be distributed to multiple network units. Part/ all of the units may be selected according to a practical requirement to achieve the purposes of the solutions of the embodiments.

In addition, each functional unit in each embodiment of the invention may be integrated into a processing unit, each functional unit may also serve as an independent processing unit and two or more than two functional units may also be integrated into a processing unit. The integrated unit may be implemented in a hardware form and may also be implemented in form of hardware and software functional unit.

The contents above are only the embodiments of the application and not intended to limit the application. Any modifications, equivalent replacements, improvements and the like made within the spirit and principle of the application shall fall within the scope of the claims of the pending application.

## Claims

1. A control and protection system for a mechanical high-voltage direct current circuit breaker, the system comprising: a central processor module; and a current acquisition and determination module, a voltage information acquisition module and an action control module that are connected with the central processor module,
wherein the current acquisition and determination module is configured to acquire a current parameter of a topology structure of the mechanical high-voltage direct current circuit breaker, determine whether a short-circuit occurs according to the current parameter and feed back a determination result and the current parameter to the central processor module;
the voltage information acquisition module is configured to acquire a voltage parameter of a commutation capacitor in the topology structure of the mechanical high-voltage direct current circuit breaker and send the voltage parameter to the central processor module;
the central processor module is configured to send a control instruction to the action control module according to at least one of: the determination result sent by the current acquisition and determination module, or the voltage parameter sent by the voltage information acquisition module; and
the action control module is configured to perform at least one of the following actions according to the control instruction sent by the central processor module: opening and closing of a permanent magnet mechanism of a Main Circuit Breaker, MCB, opening of an electromagnetic repulsion mechanism of the MCB, opening and closing of a Bypass Circuit Breaker, BCB, or turning-on or turning-off of a commutation switch.

2. The control and protection system for a mechanical high-voltage direct current circuit breaker of claim 1, wherein the current acquisition and determination module comprises a current information acquisition unit and a current detection and processing unit,
wherein the current acquisition and determination module is configured to acquire the current parameter of the topology structure of the mechanical high-voltage direct current circuit breaker, the current parameter comprising at least one of: a current change rate or a current amplitude; and
the current detection and processing unit is configured to determine whether short-circuit occurs according to the current parameter and feed back the determination result to the central processor module.

3. The control and protection system for a mechanical high-voltage direct current circuit breaker of claim 1, wherein the action control module comprises: an optical fiber isolation unit; and the permanent magnet mechanism of the MCB, the electromagnetic repulsion mechanism of the MCB, the BCB and the commutation switch that are connected with the optical fiber isolation unit; and
the optical fiber isolation unit is configured to obtain the control instruction sent by the central processor module and send the control instruction to at least one component among the permanent magnet mechanism of the MCB, the electromagnetic repulsion mechanism of the MCB, the BCB, or the commutation switch for the at least one component receiving the control instruction to perform an action corresponding to the control instruction.

4. The control and protection system for a mechanical high-voltage direct current circuit breaker of claim 3, the system further comprising a charging module of a repulsion capacitor, configured to charge the repulsion capacitor, wherein the repulsion capacitor is adapted to the electromagnetic repulsion mechanism of the MCB; the repulsion capacitor is configured to supply power to a repulsion coil in the electromagnetic repulsion mechanism of the MCB; and
the central processor module is further configured to control the charging module of the repulsion capacitor to charge the repulsion capacitor, and acquire voltage information of the repulsion capacitor.

5. The control and protection system for a mechanical high-voltage direct current circuit breaker of any one of claims 1-4, the system further comprising a state feedback indication module, a power module, an information interaction and recording module and a crash prevention module,
wherein the state feedback indication module is configured to display at least one of the following information: an opening and closing state of the MCB, an opening and closing state of the BCB, temperature, humidity, voltage information of the repulsion capacitor or voltage information of the commutation capacitor, and the state feedback indication module is further configured to detect an input operation and send the input operation to the central processor module, the input operation comprising at least one of an operation for controlling opening and closing of the MCB or an operation for controlling opening and closing of the BCB;
the power module is configured to supply power to the system;
the information interaction and recording module is configured to implement communication with an external device and recording of system running information; and
the crash prevention module is configured to prevent the central processor module from entering a crash state.

6. The control and protection system for the mechanical high-voltage direct current circuit breaker of claim 1, wherein the topology structure of the mechanical high-voltage direct current circuit breaker comprises the BCB configured to interrupt a residual current and three branches connected in parallel that includes:
a first branch comprising the MCB configured to conduct a normal working current of the system, an outlet terminal of the MCB being connected with an inlet terminal of the BCB;
a second branch which is a commutation branch and comprises a commutation reactor, the commutation switch, a charging resistor and the commutation capacitor, an end of the commutation reactor is connected with an inlet terminal of the MCB, another end of the commutation reactor is connected with an end of the commutation switch, another end of the commutation switch is connected with a positive electrode of the commutation capacitor and an end of the charging resistor, another end of the charging resistor is grounded, and a negative electrode of the commutation capacitor is connected with the inlet terminal of the BCB; and
a third branch which is an energy release branch and comprises a lightning arrester, an end of the lightning arrester is connected with the inlet terminal of the MCB, and another end of the lightning arrester is connected with the inlet terminal of the BCB.

7. The control and protection system for the mechanical high-voltage direct current circuit breaker of claim 6, wherein the MCB is a Vacuum Circuit Breaker, VCB.

8. The control and protection system for the mechanical high-voltage direct current circuit breaker of claim 6, wherein the lightning arrester is a metal oxide lightning arrester matching with a voltage grade of the system .

9. The control and protection system for a mechanical high-voltage direct current circuit breaker of claim 2, wherein the current detection and processing unit is configured to determine a current rise rate and a current increment based on the current parameter, start short-circuit current detection responsive to that the current rise rate is greater than a first threshold value, send a short-circuit current protection signal to the central processor module responsive to detecting that the current rise rate remains greater than the first threshold value within a specified delay time period, send the short-circuit current protection signal to the central processor module responsive to that the current rise rate is less than the first threshold value but greater than a second threshold value and the current increment is greater than a third threshold value, the second threshold value being less than the first threshold value, and exit from short-circuit current detection protection responsive to that the current rise rate is less than the second threshold value.

10. A control method for a control and protection system for a mechanical high-voltage direct current circuit breaker, comprising:
determining whether a feedback determination result is detected, the feedback determination result indicating that short-circuit occurs to the system;
sending, by a central processor module, an opening signal to an electromagnetic repulsion mechanism of a Main Circuit Breaker, MCB,, responsive to detecting the feedback determination result;
sending, by the central processor module, a turning-on signal to a commutation switch, responsive to that a distance between contacts of the MCB reaches a specific open distance;
sending, by the central processor module according to a preset time sequence, an opening signal to a Bypass Circuit Breaker, BCB, for turning off the BCB to interrupt a residual current; and
detecting whether the MCB is opened, detecting whether the BCB is opened responsive to detecting that the MCB is opened; determining that a short-circuit current is successfully interrupted responsive to detecting that the BCB is opened, and determining that the short-circuit current fails to be interrupted responsive to detecting that the MCB is not opened or the BCB is not opened.
